# EUROPEAN PATENT APPLICATION

(11) **EP 4 722 980 A1**
(43) Date of publication of application: **08.04.2026**
(21) Application number: 25206490.2
(22) Date of filing: 02.10.2025
(51) Int. Cl.: G06N 3/045, G06N 3/0475, G06N 3/088

(54) **USING COMPRESSED REPRESENTATIONS TO ADAPT GENERATIVE MODELS TO NEW CONTEXT DATA**

(30) Priority: 02.10.2024 US 202463702544 P
(71) Applicant: GOOGLE LLC, Mountain View CA 94043 (US)
(72) Inventor: ZELDES, Yoel Yehuda, 6789141 Tel Aviv (IL); ZAIT, Amir, 6789141 Tel Aviv (IL); FARKASH, Efrat, Mountain View, 94043 (US); LABZOVSKY, Ilia, 6789141 Tel Aviv (IL); KARMON, Danny, 6789141 Tel Aviv (IL)
(74) Representative: Thorniley, Peter

(57) **Abstract**

Methods, systems, and apparatus, including computer programs encoded on a computer storage medium, for performing a task. In one aspect, a method comprises: receiving a query for a task to be performed; receiving a plurality of context content items for the task; for each content item of the plurality of content items, processing an input comprising a representation of the content item using a trained compression model to generate a compressed representation of the content item comprising one or more vectors of a fixed size; generating, using the compressed representations, an aggregated compressed representation comprising one or more vectors that represents the plurality of content items; and processing an input comprising (i) the query and (ii) the aggregated compressed representation using a generative neural network to generate a response to the query.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

### SUMMARY

This specification generally describes a system implemented as computer programs on one or more computers in one or more locations that can use compression models to generate an aggregated compressed representation of content items (e.g., text documents, images, audio files, videos etc.) that are relevant to a task (e.g., a retrieval task, a generation task, etc.), and then use the compressed representation to perform the task.

For example, the system can receive new content items for a task after the training of the generative model.

For example, the task may be responsive to a change in the user's environment. An image or video file from a camera, for example, may be treated as a new content item for the task. The new content item may be incorporated into the compressed representation so that the generative model generates an output appropriate to current environmental context.

As another example, the task may be a personalization task that requires personalizing the output of the generative model to a new user's data. The personalization task can be, for example, a personalized skill learning task where the generative model generates a response that aligns with a user's style or preferences (e.g., generating an image that is personalized based on that user's images, generating a text document that is personalized based on text segments written by that user, generating an audio file that is personalized based on audio recordings of that user's voice, generating a video that is personalized based on videos depicting that user, generating a video that is personalized based on videos created by that user, etc.). As another example, the personalization task can be a knowledge intensive question answering task where the generative model generates a response based on the knowledge of a particular user (e.g., generating a response to a question regarding the relationship between that user and another individual that is personalized based on images depicting the user and the other individual, generating a response to an academic question for that user that is personalized based on text documents describing academic courses taken by that user, generating a response to a question about a user's friendships that is personalized based on an audio file depicting an interview of the user, etc.) The new content items can be, for example, text segments generated by a new user, audio recordings of a new user's voice, a document describing the memories of a new user, etc. Incorporating the new content items into the context for the generative model enables the generative model to generate more accurate and personalized responses.

In one aspect, there is provided a method performed by one or more computers, the method comprising: receiving a query for a task to be performed; receiving a plurality of context content items for the task; for each content item of the plurality of content items, processing an input comprising a representation of the content item using a trained compression model to generate a compressed representation of the content item comprising one or more vectors of a fixed size; generating, using the compressed representations, an aggregated compressed representation comprising one or more vectors that represents the plurality of content items; and processing an input comprising (i) the query and (ii) the aggregated compressed representation using a generative neural network to generate a response to the query.

When the system receives a new context content item that is relevant to the task (i.e., for personalization, responsive to environmental changes or due to incomplete data sets), the system can use a trained compression model to generate a new compressed representation of the new content item. The system can update the aggregated compression representation using the new compressed representation.

The subject matter described in this specification can be implemented in particular embodiments so as to realize one or more of the following advantages.

The system described in this specification can adapt a generative model to new content by using trained compression models to compress content items that are relevant to a task into an aggregated compact representation that represents all content items. Using the aggregated compact representation of the content can efficiently adapt the generative model to content without needing to re-train or fine-tune the generative model. Moreover, using the "compressed" representation allows for inference to be computationally efficient, since only the compressed representation and not the original content items need to be included in the input to the generative model.

When the system receives new content items, the system can process only the new content items to incorporate them into the aggregated compact representation without reprocessing content items that are already represented by the aggregated compact representation. The generative model then uses the updated aggregated compact representation that represents the previous content and the new content to incorporate the new content when performing the task. In this way, changes in relevant content can be incorporated in a computationally efficient manner, enabling a process which can be more responsive to changes in context (e.g. changes in environmental conditions or personalization requirements) than would otherwise be the case. For example, changes may be incorporated more quickly such that the output of the task is more closely associated with an accurate representation of the current context.

One approach for adapting generative models to new data is to integrate the new content through a prompt, i.e., by including the new content as part of a prompt sequence that is processed as input by the generative model. Integrating new content through a prompt suffers from a high inference cost as incorporating the new content can greatly increase the length of the prompt and latency and computation costs scale with the length of the prompt. By contrast, this specification describes techniques for using an aggregated compact representation of the content to adapt the generative model to content. This approach reduces the length of the prompt to the generative model, thus reducing computational costs at inference and enabling resource efficient adaptation to new content. In particular, latency can be a major issue in generative neural network inference serving, e.g., LLM serving, at inference time. By dramatically decreasing the length of the prompt that needs to be encoded, the described techniques significantly decrease the latency required for generative neural network inference. Moreover, the smaller, compressed representation can be stored along with the generative neural network, further decreasing the additional latency required to incorporate the additional context from the context items.

Another approach for adapting generative models to new data is to modify the generative model, i.e., by updating its existing weights or introducing new trainable weights. Modifying the generative model suffers from a high training cost. By contrast, this specification described techniques for using an aggregated compact representation of the content to adapt the generative model to content. This approach eliminates a need for individualized training processes for each new content item, thus reducing the training cost.

The system can generate the aggregated compact representation using a merging process to merge representations of each content item received by the system. The merging process can include an order-agnostic aggregation operation e.g., a mean pooling operation, to eliminate biases related to the position of content items. The shape of the aggregated compact representation is independent of the number of content items represented by the aggregated compact representation, reducing the computational cost of incorporating a new content item. The merging process enables the system to generate and update the aggregated compact representation efficiently as new content items are added.

The system can add a new content item to the aggregated compact representation without changing the shape of the compact representation. This allows the system to reduce the inference cost while adapting the generative model to new content items. The system can maintain a consistent prompt length regardless of the number of context items.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example response generation system.
FIG. 2 is a flow diagram of an example process for performing response generation.
FIG. 3 is a flow diagram of an example process for generating a compressed representation of a content item.
FIG. 4 is a flow diagram of an example process for training a compression model of a response generation system.
FIG. 5 illustrates an example architecture for a response generation system.
FIG. 6 shows an example architecture of a compression neural network of a compression model.
FIG. 7 shows example trade-offs between cost and quality for response generation tasks.

Like reference numbers and designations in the various drawings indicate like elements.

### DETAILED DESCRIPTION

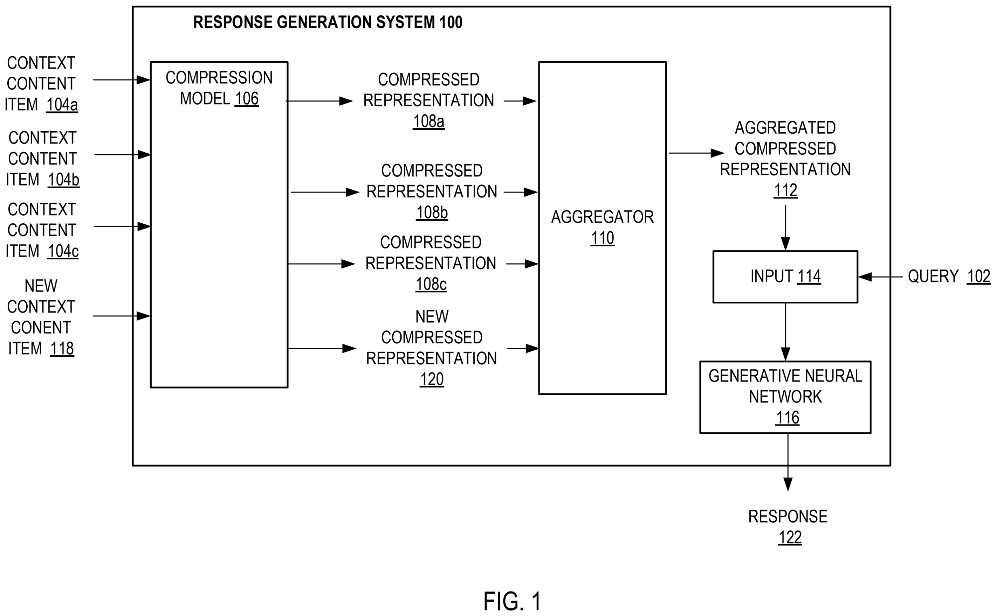

FIG. 1 shows an example response generation system 100. The response generation system 100 is an example of a system implemented as computer programs on one or more computers in one or more locations in which the systems, components, and techniques described below are implemented.

The response generation system 100 includes a compression model 106, an aggregator 110, and a generative neural network 116. The response generation system 100 is configured to process an input query 102 and one or more content items 104a-c to generate a response 122.

The response generation system 100 can receive a query for a task to be performed. The query 102 can be, for example, a request for a response that aligns with a user's style or preferences or a knowledge-intensive question. For example, the query can be a query to request a generation of a text description or summary of a content item or an answer to a question based on provided context items.

In some examples, the task may be a contextual task that requires adapting the output of the generative model to a particular current context. For example, this may be an environmental context, such as temperature, time of day, location, objects in the vicinity and so on. For example, the task may involve generating a response which takes environmental context into account (such as providing suitable information given the current context, or generating audio or video adapted to a current scenario).

In some examples, the task can be a personalization task that requires personalizing the output of a generative model to a particular user's data. The personalization task can be, for example, a personalized skill learning task where the generative model generates a response that aligns with a user's style or preferences (e.g., generating an image that is personalized based on that user's images, generating a text document that is personalized based on text segments written by that user, generating an audio file that is personalized based on audio recordings of that user's voice, generating a video that is personalized based on videos depicting that user, generating a video that is personalized based on videos created by that user, etc.).

In some examples, the personalization task can be a knowledge intensive question answering task where the generative model generates a response based on the knowledge of a particular user (e.g., generating a response to a question regarding the relationship between that user and another individual that is personalized based on images depicting the user and the other individual, generating a response to an academic question for that user that is personalized based on text documents describing academic courses taken by that user, generating a response to a question about a user's friendships that is personalized based on an audio file depicting an interview of the user, etc.)

The response generation system 100 can receive one or more context content items 104a-c for the task. The content items 104a-c can be, for example, images, text documents, audio files, videos, or a combination of these.

For example, for a contextual task, the content items 104a-c may be indicative of a current context. They may, for example, include sensor data relating to the current environmental context. For example, the sensor data may include images, videos or audio representing a current environment. The content items 104a-c can include sensor data which allows the contextual task to respond to the current context.

For example, in a personalized skill learning task, such as paraphrasing a document to match a user's writing style, the content items 104a-c can be previous documents written by that user. For example, to generate a summary of a content item in a particular author's style, the content items can be previous article-headline pairs created by that author. The content items 104a-c can provide examples that can be used to personalize the task performance by inferring a user's style or preferences from their past work.

In some examples, for a knowledge-intensive question answering task, the content items 104a-c can be a personalized knowledge base for a specific user. For example, if a user query asks about the relationship between two individuals, the content items 104a-c can be text documents or images describing interactions between those individuals. The system 100 can determine specific information from the content items 104a-c, e.g., including verbatim details, to generate an accurate response based on the knowledge contained within those content items.

For each content item 104a-c, the compression model 106 can process an input that includes the content item to generate a compressed representation 108a-c of the content item. The compressed representation 108a-c can represent the content item in a compact form that is designed for subsequent processing. This compressed representation can summarize relevant information from the original content item into a fixed-size format.

A compressed representation 108a-c of the content item can include one or more vectors of a fixed size. The vectors can be compact representations of the content item. In some implementations, the vectors can have a fixed size corresponding to a number of embeddings that each have the same fixed, dimensionality, e.g., 4, 8, 16, 32, 64, or 128 embeddings that are each the same dimensionality, e.g., all have either 256, 512, or 1024 entries. Each content item can be mapped to the same number of embeddings regardless of size. This allows for consistent processing regardless of the original content item's length. By maintaining a uniform size, these vectors facilitate efficient aggregation and subsequent processing by other components of the system 100.

The compression model 106 can include a compression generative neural networks. In some examples, the compression model 106 can include a respective compression generative neural network for each type of content item 104a-c. For example, the compression model 106 can include a compression generative neural network for processing text and a compression generative neural network for processing images. The compression model 106 can be a recurrent neural network, a self-attention neural network, or a neural network that includes both recurrent and self-attention layers.

The neural network layers can include one or more self-attention layers. A self-attention layer can be configured to process its inputs by calculating attention scores. A self-attention layer can be configured to process its inputs by calculating attention scores that represent the relevance of different parts of the input to each other. The neural network can use the attention scores to compute a weighted sum of the input representations. This allows the layer to focus on information that is associated with higher attention scores, e.g., more relevant information. Generative neural networks are described in further detail below. To generate a compressed representation 108a-c of a content item 104a-c, the compression model 106 can append one or more compression embeddings to tokens representing the content item. The response generation system 100 can generate a tokenized version of the content item 104a-c. The response generation system 100 can tokenize the content item 104a-c into a sequence of tokens.

In some implementations the tokens can represent text, e.g., words, wordpieces or characters, in a natural or computer language. For example, text may be received, e.g., as a series of encoded characters, e.g. UTF-8 encoded characters; such "characters" can include Chinese and other similar characters, as well as logograms, syllabograms and the like. A text encoder, i.e. a tokenizer, can process a sequence of text to represent the text as a series of text tokens from a vocabulary of text tokens, e.g. that each represent words, wordpieces or characters in a natural or computer language. The computer language may be any formal language used to communicate with a computer, e.g. a markup language, or a command or configuration language, or a data exchange language such as JSON, or a programming language. The tokenizer can, e.g., implement BPE (Byte Pair Encoding) or Wordpiece tokenization. Optionally the text can be obtained from audio data representing speech; the output tokens may be converted into audio data

Also, or instead the tokens may represent an image. For example, a set (sequence) of input or output tokens can represent an image. Each image token may comprise a block encoding of values of the pixels in a different region of an image that maps a set of values of the pixels to a respective image token. The block encoder may comprise a neural network, e.g. having one or more (self-)attention layers, such as a Transformer neural network.

Also, or instead the tokens may represent an audio waveform. For example, a set (sequence) of input or output tokens can represent audio data representing a waveform e.g. instantaneous audio amplitude values or time-frequency audio data. Each image token may comprise a block encoding of the audio waveform in a different time segment of the audio that maps a set of values representing the audio waveform to a respective image token. The block encoder may comprise a neural network, e.g. having one or more (self-)attention layers, such as a Transformer neural network. In a multimodal system audio data or an image may be flagged by a start-of-audio token or start-of-image token.

A compression neural network can process the sequence of tokens representing the content item 104a-c and the one or more compression embeddings. These compression embeddings can be special compression tokens that are appended to the input sequence of tokens representing the content item. The combined sequence, including both the compression embeddings and the content item's tokens, can be provided as input to the compression neural network.

The compression neural network can use representations of the one or more compression embeddings generated by a last neural network layer in the compression generative neural network as the compressed representation of the content item. After processing by the neural network layers, the representations of the compression embeddings can encapsulate information from the content item. The final layer's representations of the compression embeddings can be extracted as the compressor's output. The system can use the extracted representations of the embeddings as the compressed representation for the content item.

This allows the network to insert salient information from the content item into the representations associated with the compression embeddings. The final layer representations of the compression tokens can encapsulate semantic information of the content item. By focusing processing power of the neural network on these specific compression tokens, the system 100 can generate a concise and representative vector for each content item.

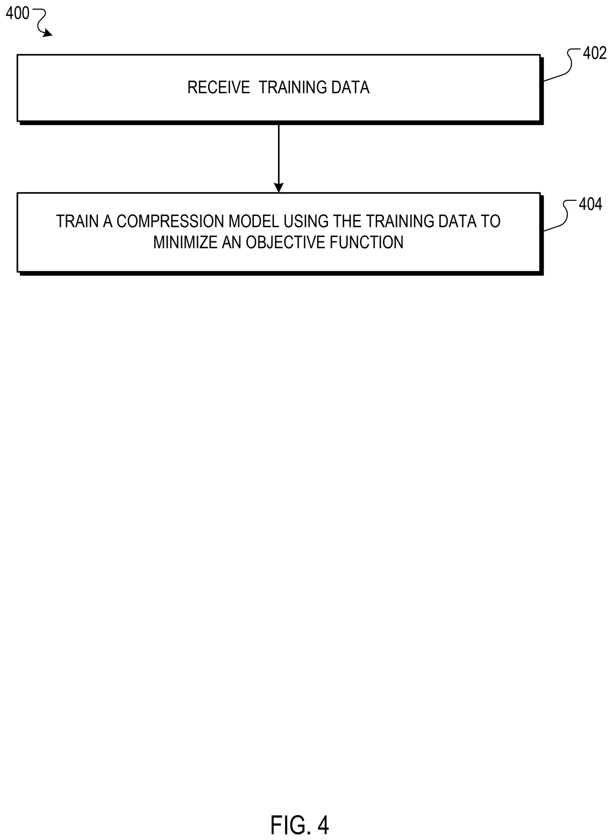

The compression embeddings can be learned during a training process. Training the compression model 106 is described in further detail below with reference to FIG. 4.

The aggregator 110 can generate, using the compressed representations 108a-c, an aggregated compressed representation 112. The aggregated compressed representation 112 can include one or more vectors that represent the content items 104a-c. The aggregated compressed representation can represent the combined information from all content items 104a-c in a single, compact format. This aggregated representation can be created by combining the individual compressed representations 108a-c of each content item. The aggregated compressed representation 112 can encapsulate the relevant information from the entire collection of content items 104a-c. The resulting single representation can then be efficiently processed.

In some examples, the aggregator 110 can use an order-agnostic aggregation operation to generate the aggregated compressed representation 112. The aggregator 110 can apply an order-agnostic aggregation operation to the compressed representations 108a-c of the content items. The order-agnostic aggregation operation can be, for example, a mean pooling operation. The mean pooling operation can calculate a single aggregated vector by averaging the corresponding components of the individual compressed representation vectors. By using an order-agnostic approach, the resulting aggregated compressed representation 112 is not biased by the position or sequence in which the content items are processed. The aggregated compressed representation 112 can remain consistent regardless of the arrangement of the input content items.

The aggregated compressed representation 112 can be of the fixed size, e.g., the same size as the compressed representations 108a-c. This is because the shape of the aggregated compressed representation is independent of the number of content items from which it is generated. Because an order-agnostic aggregation operation produces a representation of a consistent shape regardless of the number of input representations, the shape of the aggregated compressed representation can be maintained even when new compressed representations are incorporated. For example, the aggregated compressed representation can have a fixed size corresponding to 4, 8, 16, 32, 64, or 128 embeddings. The aggregated compressed representation can be mapped to a fixed number of embeddings regardless of the number of content items it represents. For example, an aggregated representation 112 that represents two content items can have a same number of embeddings as an aggregated representation that represents five content items.

The generative neural network 116 can process an input 114 to generate a response 122 to the query 102. The generative neural network can be configured to perform a generative task to generate, as output, data that includes, for example, text data, image data, video data, audio data, or multimodal data that includes data in two or more different modalities.

In some situations, the generative neural network can be referred to as an auto-regressive neural network when the neural network auto-regressively generates an output sequence of tokens as a network output. More specifically, the auto-regressively generated output is created by generating each particular token in the output sequence conditioned on a current input sequence that includes an input sequence included in the network input and any tokens that precede the particular token in the output sequence, i.e., the tokens that have already been generated for any previous positions in the output sequence that precede the particular position of the particular token.

The generative neural network can, for example, have any of a variety of Transformer-based neural network architectures, e.g., encoder-only Transformer architectures, encoder-decoder Transformer architectures, decoder-only Transformer architectures, diffusion Transformer architectures, other attention-based architectures, and so on.

Examples of such Transformer-based neural network architectures include those described in Colin Raffel, et al., Exploring the limits of transfer learning with a unified text-to-text transformer. arXiv preprint arXiv:1910.10683, 2019; Daniel Adiwardana, et al., Towards a human-like open-domain chatbot. CoRR, abs/2001.09977, 2020; Aakanksha Chowdhery, et al., PaLM: Scaling Language Modeling with Pathways, arXiv preprint arXiv:2204.02311; Rohan Anil, et al. Palm 2 technical report. arXiv preprint arXiv:2305.10403, 2023; and Gemini Team, et al., Gemini: a family of highly capable multimodal models. arXiv preprint arXiv:2312.11805 (2023).

For example, the generative neural network may be a generative language model neural network. Examples of generative language model neural networks include Sparrow (Glaese et al. arXiv:2209.14375), Chinchilla (Hoffmann et al. arXiv:2203.15556), and PaLM 2 (Anil, et al. arXiv:2305:10403). As another example, the generative neural network may be a multi-modal model neural network, e.g., a vision language model (VLM) neural network. Examples of multi-modal neural networks include Flamingo (Alayrac et al. arXiv: 2204.14198), PaLI (Chen et al. arXiv: 2209.06794), and PaLI-X (Chen et al. arXiv: 2305.18565).

As another example, the generative neural network may be a foundation model neural network. A foundation model neural network is a large-scale machine learning model trained on a broad data set that can be adapted and fine-tuned for a wide variety of applications and downstream tasks. Examples of foundation model neural networks include Imagen (Saharia et al. arXiv: 2205.11487) and Parti (Yu et al. arXiv: 2206.10789).

Some examples of machine learning tasks, including generative tasks, that the generative neural network when implemented using one of the architectures described below or other known architectures can be configured to perform follow.

In some cases, the generative neural network is a neural network that is configured to perform an image processing task, i.e., receive a network input that includes an image and to process the image to generate a network output for the input image. For example, the task may be image classification and the output generated by the neural network for a given image may be scores for each of a set of object categories, with each score representing an estimated likelihood that the image contains an image of an object belonging to the category. As another example, the task can be image embedding generation and the output generated by the neural network can be a numeric embedding of the input image. As yet another example, the task can be object detection and the output generated by the neural network can identify locations in the input image at which particular types of objects are depicted. As yet another example, the task can be image segmentation and the output generated by the neural network can assign each pixel of the input image to a category from a set of categories. In some other cases, the neural network is a neural network that is configured to perform an image generation task, where the input is a conditioning input and the output is a sequence of intensity value inputs for the pixels of an image.

As one example, the task may be a neural machine translation task. For example, if the network input to the generative neural network is a sequence of text, e.g., a sequence of words, phrases, characters, or word pieces, in one language, the network output generated by the neural network may be a translation of the sequence of text into another language, i.e., a sequence of text in the other language that is a translation of the input sequence of text. The vocabulary for the input tokens may be words, wordpieces or characters of the first language, and the vocabulary for the output tokens may be words, wordpieces or characters of the other language. As a particular example, the task may be a multi-lingual machine translation task, where a single neural network is configured to translate between multiple different source language - target language pairs. In this example, the source language text may be augmented with an identifier that indicates the target language into which the neural network should translate the source language text.

Some implementations may be used for automatic code generation. For example, the input tokens may represent words, wordpieces or characters in a first natural language and the output tokens may represent instructions in a computer programming or markup language, or instructions for controlling an application program to perform a task e.g. build a data item such as an image or web page.

As another example, the task may be an audio processing task. For example, if the network input to the generative neural network is a sequence representing a spoken utterance, the network output generated by the neural network may be a score for each of a set of pieces of text, each score representing an estimated likelihood that the piece of text is the correct transcript for the utterance. As another example, if the network input to the neural network is a sequence representing a spoken utterance, the network output generated by the neural network can indicate whether a particular word or phrase ("hotword") was spoken in the utterance. As another example, if the network input to the generative neural network is a sequence representing a spoken utterance, the network output generated by the neural network can be a classification of the spoken utterance into one of a plurality of categories, for example an identity of the natural language in which the utterance was spoken.

As another example, the task can be a natural language processing or understanding task, e.g., an entailment task, a paraphrase task, a textual similarity task, a sentiment task, a sentence completion task, a grammaticality task, and so on, that operates on a sequence of text in some natural language.

As another example, the task can be a text to speech task, where the network input is text in a natural language or features of text in a natural language and the network output is a spectrogram, a waveform, or other data defining audio of the text being spoken in the natural language.

As another example, the task can be a health prediction task, where the network input is a sequence derived from electronic health record data for a patient and the network output is a prediction that is relevant to the future health of the patient, e.g., a predicted treatment that should be prescribed to the patient, the likelihood that an adverse health event will occur to the patient, or a predicted diagnosis for the patient. Such electronic health data may, for example, comprise one or more sequences of physiological data taken from a patient, with the output being a corresponding prediction that relates to those sequences of data. Examples of physiological data and a corresponding prediction include: blood glucose measurements, with the prediction being a predicted future blood glucose measurement or the prediction of a hyper- or hypoglycemic event; a heart rate, with the prediction being the presence or absence of a heart condition, or a future cardiac event; blood pressure measurements, with the prediction being the risk of a future heart condition; or the like.

As another example, the task can be a text generation task, where the network input is a sequence of text, and the network output is another sequence of text, e.g., a completion of the input sequence of text, a response to a question posed in the input sequence, or a sequence of text that is about a topic specified by the first sequence of text. As another example, the network input to the text generation task can be an input other than text, e.g., an image, and the network output sequence can be text that describes the network input.

In some implementations the input sequence represents data to be compressed, e.g. image data, text data, audio data, or any other type of data; and the output sequence a compressed version of the data. The input and output tokens may each comprise any representation of the data to be compressed/compressed data e.g. symbols or embeddings generated/decoded by a respective neural network.

As another example, the task can be an agent control task, where the network input is a sequence of observations or other data characterizing states of an environment and the network output defines an action to be performed by the agent in response to the most recent data in the sequence. The agent can be, e.g., a real-world or simulated robot, a control system for an industrial facility, or a control system that controls a different kind of agent. The observations may comprise sensor data captured by sensors associated with (e.g. part of) the agent, for example visual data, LIDAR data, sonar data, agent configuration data (e.g. joint angles), agent orientation data, or the like.

In some implementations, the environment is a real-world environment, the agent is a mechanical (or electro-mechanical) agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot interacting with the environment to accomplish a specific task, e.g., to locate or manipulate an object of interest in the environment or to move an object of interest to a specified location in the environment or to navigate to a specified destination in the environment.

In these implementations, the observations may include, e.g., one or more of: images, object position data, and sensor data to capture observations as the agent interacts with the environment, for example sensor data from an image, distance, or position sensor or from an actuator. For example, in the case of a robot, the observations may include data characterizing the current state of the robot, e.g., one or more of: joint position, joint velocity, joint force, torque or acceleration, e.g., gravity-compensated torque feedback, and global or relative pose of an item held by the robot. In the case of a robot or other mechanical agent or vehicle the observations may similarly include one or more of the positions, linear or angular velocity, force, torque or acceleration, and global or relative pose of one or more parts of the agent. The observations may be defined in 1, 2 or 3 dimensions, and may be absolute and/or relative observations. The observations may also include, for example, sensed electronic signals such as motor current or a temperature signal; and/or image or video data for example captured by a camera or a LIDAR sensor, e.g., data from sensors of the agent or data from sensors that are located separately from the agent in the environment.

In these implementations, the actions may be control signals to control the robot or other mechanical agent, e.g., torques for the joints of the robot or higher-level control commands, or the autonomous or semi-autonomous land, air, sea vehicle, e.g., torques to the control surface or other control elements e.g. steering control elements of the vehicle, or higher-level control commands. The control signals can include for example, position, velocity, or force/torque/acceleration data for one or more joints of a robot or parts of another mechanical agent. The control signals may also or instead include electronic control data such as motor control data, or more generally data for controlling one or more electronic devices within the environment the control of which has an effect on the observed state of the environment. For example, in the case of an autonomous or semi-autonomous land or air or sea vehicle the control signals may define actions to control navigation e.g. steering, and movement e.g., braking and/or acceleration of the vehicle.

In some implementations the environment is a simulation of the above-described real-world environment, and the agent is implemented as one or more computers interacting with the simulated environment. For example, a system implementing the generative neural network may be used to select actions in the simulated environment during training or evaluation of the system and, after training, or evaluation, or both, are complete, the action selection policy may be deployed for controlling a real-world agent in the particular real-world environment that was the subject of the simulation. This can avoid unnecessary wear and tear on and damage to the real-world environment or real-world agent and can allow the control neural network to be trained and evaluated on situations that occur rarely or are difficult or unsafe to re-create in the real-world environment. For example, the system may be partly trained using a simulation of a mechanical agent in a simulation of a particular real-world environment, and afterwards deployed to control the real mechanical agent in the particular real-world environment. Thus, in such cases the observations of the simulated environment relate to the real-world environment, and the selected actions in the simulated environment relate to actions to be performed by the mechanical agent in the real-world environment.

In some implementations, as described above, the agent may not include a human being (e.g. it is a robot). Conversely, in some implementations the agent comprises a human user of a digital assistant such as a smart speaker, smart display, or other device. Then the information defining the task can be obtained from the digital assistant, and the digital assistant can be used to instruct the user based on the task.

For example, a system implementing the generative neural network may output to the human user, via the digital assistant, instructions for actions for the user to perform at each of a plurality of time steps. The instructions may for example be generated in the form of natural language (transmitted as sound and/or text on a screen) based on actions chosen by the system. The system chooses the actions such that they contribute to performing a task. A monitoring system (e.g. a video camera system) may be provided for monitoring the action (if any) which the user actually performs at each time step, in case (e.g. due to human error) it is different from the action which the system instructed the user to perform. Using the monitoring system the system can determine whether the task has been completed. The system may identify actions which the user performs incorrectly with more than a certain probability. If so, when the system instructs the user to perform such an identified action, the system may warn the user to be careful. Alternatively, or additionally, the system may learn not to instruct the user to perform the identified actions, i.e. ones which the user is likely to perform incorrectly.

More generally, the digital assistant instructing the user may comprise receiving, at the digital assistant, a request from the user for assistance and determining, in response to the request, a series of tasks for the user to perform, e.g. steps or sub-tasks of an overall task. Then for one or more tasks of the series of tasks, e.g. for each task, e.g. until a final task of the series the digital assistant can be used to output to the user an indication of the task, e.g. step or sub-task, to be performed. This may be done using natural language, e.g. on a display and/or using a speech synthesis subsystem of the digital assistant. Visual, e.g. video, and/or audio observations of the user performing the task may be captured, e.g. using the digital assistant. A system as described above may then be used to determine whether the user has successfully achieved the task e.g. step or sub-task, i.e. from the answer as previously described. If there are further tasks to be completed the digital assistant may then, in response, progress to the next task (if any) of the series of tasks, e.g. by outputting an indication of the next task to be performed. In this way the user may be led step-by-step through a series of tasks to perform an overall task. During the training of the generative neural network, training rewards may be generated e.g. from video data representing examples of the overall task (if corpuses of such data are available) or from a simulation of the overall task.

In a further aspect there is provided a digital assistant device including a system as described above. The digital assistant can also include a user interface to enable a user to request assistance and to output information. In implementations this is a natural language user interface and may comprise a keyboard, voice input-output subsystem, and/or a display. The digital assistant can further include an assistance subsystem configured to determine, in response to the request, a series of tasks for the user to perform. In implementations this may comprise a generative (large) language model, in particular for dialog, e.g. a conversation agent such as Sparrow (Glaese et al. arXiv:2209.14375) or Chinchilla (Hoffmann et al. arXiv:2203.15556). The digital assistant can have an observation capture subsystem to capture visual and/or audio observations of the user performing a task; and an interface for the above-described language model neural network (which may be implemented locally or remotely). The digital assistant can also have an assistance control subsystem configured to assist the user. The assistance control subsystem can be configured to perform the steps described above, for one or more tasks e.g. of a series of tasks, e.g. until a final task of the series. More particularly the assistance control subsystem and output to the user an indication of the task to be performed, capture, using the observation capture subsystem, visual or audio observations of the user performing the task, determine from the above-described answer whether the user has successfully achieved the task. In response the digital assistant can progress to a next task of the series of tasks and/or control the digital assistant, e.g. to stop capturing observations.

As another example, the task can be a genomics task, where the network input is a sequence representing a fragment of a DNA sequence or other molecule sequence and the network output is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the machine learning task is a combination of multiple individual machine learning tasks, i.e., the system is configured to perform multiple different individual machine learning tasks, e.g., two or more of the machine learning tasks mentioned above. For example, the system can be configured to perform multiple individual natural language understanding tasks, with the network input including an identifier for the individual natural language understanding task to be performed on the network input.

In some cases, the machine learning task is a multi-modal processing task that requires processing multi-modal data. In general, multi-modal data is a combination of two or more different types of data, e.g., two or more of audio data, image data, text data, or graph data. As one example the multi-modal data may comprise audio-visual data, comprising a combination of pixels of an image or of video and audio data representing values of a digitized audio waveform. As another example the multi-modal data may comprise a combination of i) text data representing text in a natural language and ii) pixels of an image or of video or audio data representing values of an audio waveform. Optionally, but not necessarily, the different types of data may represent the same or overlapping objects using the different modalities (types), and when processing multi-modal data the data may be mapped into a common embedding space.

As a particular example, the task is a multi-modal processing task that requires processing both text and image inputs, so that the neural network includes both a computer vision neural network and a text processing neural network. That is, the target output to be generated by the computer vision neural network for a given image depends on one or more outputs generated by the text processing neural network for one or more corresponding text inputs (and vice versa). Examples of such tasks include open-vocabulary image classification, open-vocabulary object detection, image captioning, text-based image search, image-based retrieval, and so on.

More generally, the multi-modal processing task may correspond to any of the tasks previously described for any of the types of data making up the multi-modal combination. For example, an accuracy of the previously described tasks may be increased when the task is applied to multi-modal data combining the data for which the task has been previously described and another type of data. For example, detection or classification of an object or event may be improved when data of multiple different types (modalities) is processed.

In particular, the generative neural network is capable of receiving network inputs and generating network outputs for multiple different machine learning tasks. Generally, two machine learning tasks are different if they have different desired outputs for the inputs received for the tasks. For example, two image classification tasks can be different if the object categories into which each task requires classifying input images are different. As another example, two robot learning tasks can be different if the two tasks require generating outputs defining actions to be performed by a robot to reach two different goals.

In practice, for any of these examples, the task to be performed by the neural network can be defined by (at least a part of) the network input, e.g., that is in the form of a prompt or a request, received by the neural network. In other words, the neural network will be able to perform any of these tasks when an appropriate prompt or request is received.

The generative neural network 116 can be a large language model (LLM). In some examples, the generative neural network 116 can be a pre-trained model with its weights held fixed during the training of the compression model 106. The generative neural network can be configured to process the aggregated compressed representation in the form of a soft prompt that is conditioned on both the query and the aggregated compressed representation 112 of the content items to generate the response 122. The generative neural network 116 can have the same underlying architecture as one or more compression neural networks of the compression model 106, and in some configurations, can share weights with the one or more compression neural networks to optimize resource efficiency.

The input 114 can include the query 102 and the aggregated compressed representation 112. The response generation system 100 can form the input 114 by concatenating the aggregated compressed representation 112 with an embedding of the query 102. The response generation system 100 can tokenize the query to generate the embedding of the query 102. The embedding of the query can include a respective embedding for each token for the query 102. The tokens can represent, for example, words in the query. This combined input 114 is then fed into the generative neural network 116. The generative neural network 116 then produces the response 122 based on this combined input 114.

The response 122 can be any form of data generated by the generative neural network 116 based on the task defined by the query 102 and the context provided by the aggregated compressed representation 112. For example, the response 122 could be an audio file, a video, a textual document, or an image.

For example, in a personalized skill learning task, the response could be a text document, an image, an audio file, or a video that reflects a user's style or preferences as determined from the content items 104a-c. For example, if the task is to paraphrase a social media post, the response 122 would be a paraphrased version of the post that aligns with the writing style demonstrated in previous posts provided as content items.

For a knowledge-intensive question answering task, the response 122 can be an answer to the query 102, with the answer formulated based on the information within the content items 104a-c. For example, if the query asks about the relationship between two individuals and the content items are documents describing their interactions, the response 122 can be a textual answer summarizing that relationship. In some examples, the response 122 is not limited to text and can take other forms, e.g., an image in a particular style given a set of example images as context items, or a segment of audio mimicking a particular voice from audio samples provided as context.

In some examples, the response generation system 100 can receive a new context item for the task. For example, a new context item can become available after an initial set of context items has been processed. In a personalization task, this can occur when a user generates new content, e.g., writing a new social media post or creating a new document or capturing or uploading a new image. In a knowledge-intensive question answering task, a new context item can be added to a knowledge base to provide updated or more complete information. The response generation system 100 can incorporate such new items without needing to re-process the previously received context items. This allows for efficient updates to the contextual information used by the generative neural network 116.

The compression model 106 can process an input that includes the new content item 118 to generate a new compressed representation 120 of the new content item. The new compressed representation 120 can include one or more vectors. The vectors can be of a fixed size, e.g., the same size as the previously generated compressed representations 108a-c. The new compressed representation 120 can represent the new content item in a compact form suitable for subsequent processing.

The response generation system 100 can update the aggregated compressed representation 112 using the new compressed representation 120. The aggregator 110 can incorporate the new compressed representation 120 into the aggregated compressed representation 112. For instance, in implementations where a mean pooling operation is used, the aggregator 110 can update the aggregated compressed representation by recomputing the mean based on the previous representation and the new one without reprocessing the original content items. The updated representation can be calculated using a weighted average of the previous aggregated representation and the new compressed representation, based on the respective counts of content items they represent.

Once the aggregator 110 updates the aggregated compressed representation 112 with the new compressed representation 120, the generative neural network 116 can process a new input to generate a new response to the query 102. The new input can include the query 102 and the updated aggregated compressed representation. The new response can be generated based on the context from both the original content items 104a-c and the new content item 118. This allows the response generation system 100 to adapt to new information efficiently without reprocessing the full set of content items.

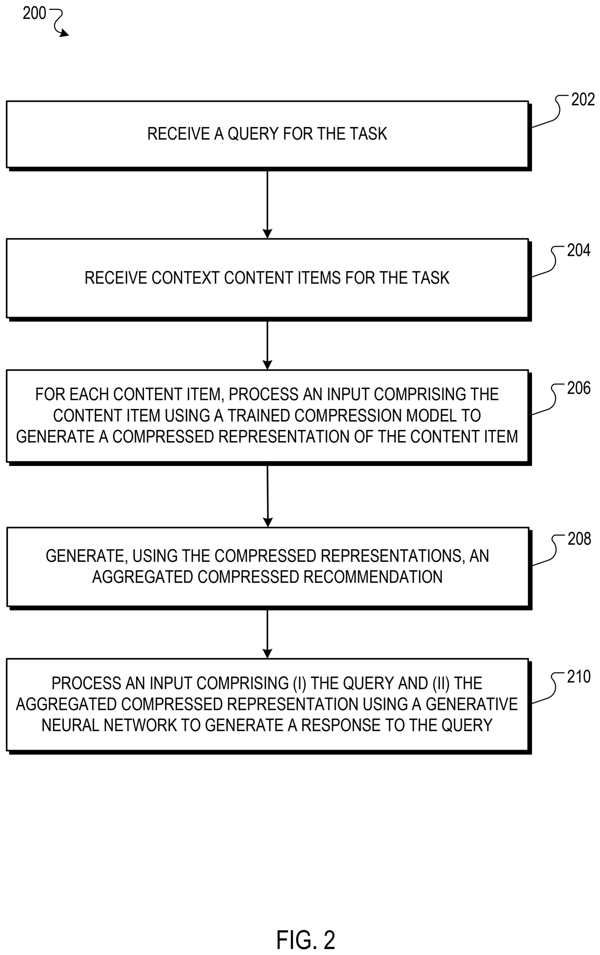

FIG. 2 is a flow diagram of an example process for performing response generation. For convenience, the process 200 will be described as being performed by a system of one or more computers located in one or more locations. For example, a caption generation system, e.g., the response generation system 100 of FIG. 1, appropriately programmed in accordance with this specification, can perform the process 200.

The system can receive a query for a task to be performed (step 202). The query can specify a personalization task, for example, which involves tailoring output based on user data, or a knowledge-intensive question answering task. In some examples, the query can be a query to request a generation of a text description or summary of a content item. In some examples, the query can be a query to request an answer to a question based on provided context items.

The system can receive a plurality of context content items for the task (step 204). The content items can be, for example, images, text documents, audio files, videos, or a combination of these. The content items can be associated with a particular user. In some cases, the content can be associated with a group of users that includes the particular user.

For each content item of the plurality of content items, the system can process an input using a trained compression model to generate a compressed representation of the content item (step 206). The input can include a representation of the content item. The representation of the content item can be a sequence of tokens that represent the content item. The compressed representation can include one or more vectors of a fixed size. For example, the vectors can have a fixed size corresponding to a number of embeddings, e.g., 4, 8, 16, 32, 64, or 128 embeddings. The compressed representation can include a same number of embeddings regardless of the size of the content item. Training the compression model is described in further detail below with reference to FIG. 4.

The system can generate, using the compressed representations, an aggregated compressed representation (step 208). The aggregated compressed representation can include one or more vectors that represents the content items. The aggregated compressed representation can be of the fixed size. For example, the aggregated compressed representation can be of the fixed size corresponding to 4, 8, 16, 32, 64, or 128 embeddings.

In some examples, to generate the aggregated compressed representation, the system can apply an order-agnostic aggregation operation to the compressed representations of the content items. The order-agnostic aggregation operation can be, for example, a mean pooling operation. The mean pooling operation can calculate a single aggregated vector by averaging the corresponding components of the individual compressed representation vectors.

The system can process an input using a generative neural network to generate a response to the query (step 210). The input can include a representation of the query and the aggregated compressed representation. The representation of the query can be a sequence of tokens that represent the query. The generated response can be any form of data, e.g., a textual document, an image, an audio file, or a video.

In some examples, the system can receive a new content item for the task. The system can process an input that includes the new content item to generate a new compressed representation of the new content item. The system can update the aggregated compressed representation using the new compressed representation. The system can use the updated aggregated compressed representation to process the input to generate the response to the query. The system can incorporate the new content item into the aggregated compressed representation without reprocessing the original context content items.

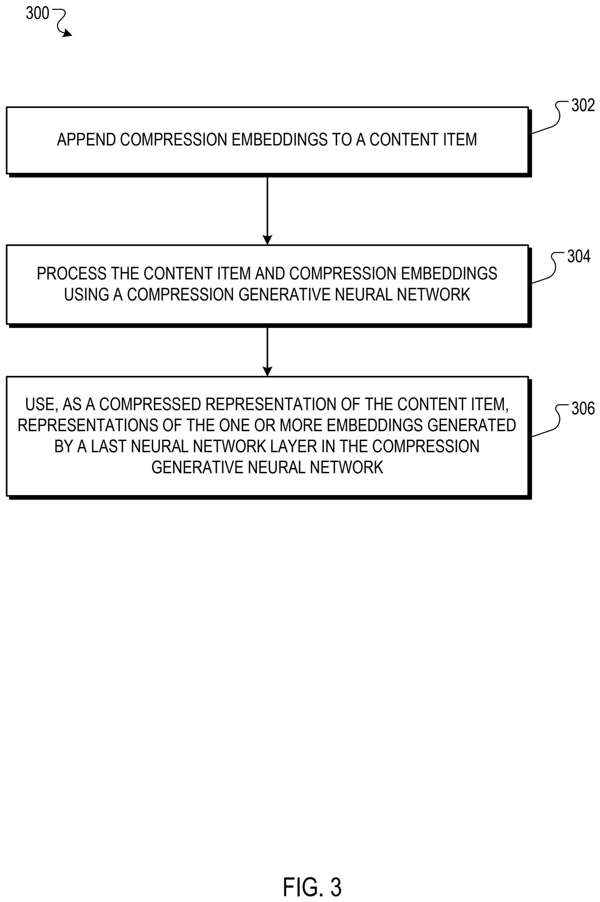

FIG. 3 is a flow diagram of an example process 300 for generating a compressed representation of a content item. For convenience, the process 300 will be described as being performed by a system of one or more computers located in one or more locations. For example, a response generation system, e.g., the response generation system 100 of FIG. 1, appropriately programmed in accordance with this specification, can perform the process 300.

The system can append one or more compression embeddings to a representation of the content item (step 302). The compression embeddings can be special tokens that are appended to the input sequence representing the content item. The system can append the compression embeddings to a sequence of tokens that represent the content item. The compression embeddings can be learned during a training process that is described in further detail below with reference to FIG 4.

The appended compression embeddings and the content item can be provided as input to the compression neural network. This allows the network to insert salient information from the content item into the representations associated with the compression embeddings.

The system can process the content item and the one or more compression embeddings using a compression generative neural network (step 304). The compression generative neural network can be, for example, a pre-trained large language model (LLM). The compression generative neural network can include a plurality of neural network layers. In some examples, at least one of the neural network layers can include one or more self-attention layers.

The system can use, as the compressed representation of the content item, representations of the one or more compression embeddings generated by a last neural network layer in the compression generative neural network (step 306). The compression embeddings generated by the last neural network layer can represent semantic information of the content item.

The compression neural network can use representations of the one or more compression embeddings generated by a last neural network layer in the compression generative neural network as the compressed representation of the content item. After processing by the neural network layers, the representations of the compression embeddings can encapsulate information from the content item. The final layer's representations of the compression embeddings can be extracted as the compression neural network's output. The system can use the extracted representations of the embeddings as the compressed representation for the content item.

FIG. 4 is a flow diagram of an example process 400 for training a compression model of a response generation system. For convenience, the process 400 will be described as being performed by a system of one or more computers located in one or more locations. For example, a training system of a response generation system, e.g., the response generation system 100 of FIG. 1, appropriately programmed in accordance with this specification, can perform the process 400.

The system receives training data (step 402). The training data can include multiple training examples and multiple training context content items. Each training example can include a training query and a training response to the training query. Each training example can further include multiple training context content items.

The training query can specify a personalization task, for example, which involves tailoring output based on user data, or a knowledge-intensive question answering task. The training query can alternatively or additionally specify a contextual task, for example, which involves tailoring output based on a current context, such as a current environmental context. The training response can be, for example, a textual document, an image, an audio file, or a video. The training response for a training example can specify a target output for the training example. The training context content items context content items can be, for example, images, text documents, audio files, videos, or a combination of these. The training context content items can be associated with a particular user. The training context items can be associated with the task specified by the training query. For example, for a knowledge-intensive question answering task, the training context items can be text documents describing previous interactions of the particular user. For example, for an image-based personalization task, the training context items can be images of the particular user.

The system can train a compression model using the training data to minimize an objective function (step 404). For each training content item of the plurality of training content items, the system can process an input using a compression model to generate a compressed representation of the training content item. The input can include the training content item and one or more compression embeddings. The compressed representation can include one or more vectors. The vectors can be of a fixed size. For example, the vectors can have a fixed size corresponding to a number of embeddings, e.g., 4, 8, 16, 32, 64, or 128 embeddings.

The system can generate, using the compressed representations, a training aggregated compressed representation. The training aggregated compressed representation can include one or more vectors that represents the multiple training content items. The training aggregated compressed representation can be of a fixed size. For example, the training aggregated compressed representation can be of the fixed size corresponding to 4, 8, 16, 32, 64, or 128 embeddings.

The system can train the compression model using the training examples and the training aggregated compressed representation to minimize an objective function. The system can, for each training example, process the training query and the training aggregated compressed representation using a generative neural network, e.g., the generative neural network 116 of FIG. 1, to generate a response to the training query. In some examples, the compression model and the generative neural network can be a single neural network. The objective function can measure a quality of the generated response to the training query relative to the training response to the training query. For example, a lower value of the objective function can indicate that the generated response is closer in semantic content or style to the training response, while a higher value can indicate a greater divergence.

The objective function can include, for example, a cross-entropy loss term. In some implementations, the cross-entropy loss term can be calculated using a probability distribution over a vocabulary of tokens predicted by the generative neural network for each position in the generated response. The loss can be computed by comparing the predicted probability distribution to a target distribution. By minimizing the cross-entropy loss term, the system can adjust the weights of the compression model to increase a likelihood that the generative neural network will produce a sequence of tokens that matches the training response.

In some implementations, the compression model can include pre-trained weights that are held fixed during the training and trainable weights that are updated during the training. The trainable weights can be LoRA weights. In some examples, the pre-trained weights can be weights of a foundational generative neural network model, e.g., a foundational LLM. The pre-trained weights can be kept frozen during the training of the compression model. Holding these weights fixed can leverage language understanding capabilities of the foundational model without incurring high computational costs associated with fully fine-tuning the entire model.

In some implementations, the compression model can be pretrained to enhance performance. Pretraining can involve training the model on an unsupervised task, such as an auto-encoding task designed for a multi-document setup. For example, during pretraining, multiple documents can be provided as input, and a query can ask for the content of one specific document from the set. The pretraining task can be a task to reconstruct the text from the selected document. This can train the model to effectively compress and retrieve information from multiple sources.

Only updating trainable weights in the compression model can allow the training process to focus on a smaller, more manageable set of parameters. This can lead to improved, e.g., increased, efficiency during training. The trainable weights can be a comparatively small subset of the total parameters. The trainable weights can adapt the compression model for the specific task of generating compact representations of content items.

For example, the trainable weights can be integrated into the compression model using parameter-efficient fine-tuning techniques, e.g., a Low-Rank Adaptation (LoRA) technique. LoRA weights can be introduced as trainable, low-rank matrices into the layers of the pre-trained model. During training, updates can be applied to these LoRA weights, while the original pre-trained weights of the foundational model remain unchanged. This allows the compression model to be adapted to the compression task in a parameter-efficient manner, which reduces the computational resources used for training and storage. By adjusting these specific weights, the compression model can learn to produce compressed representations that are effective for processing by a generative neural network, e.g., the generative neural network 116 of FIG. 1.

Training the compression model can include propagating gradients to the one or more compression embeddings. During training, the system can determine gradients of the objective function with respect to the trainable parameters of the compression model. The system can then update the trainable parameters using the gradients, for example, using a backpropagation algorithm. Because the compression embeddings are trainable parameters, the system can propagate the gradients back to the one or more compression embeddings to adjust their values. This allows the embeddings to learn representations that effectively summarize the content items for an input to a generative neural network.

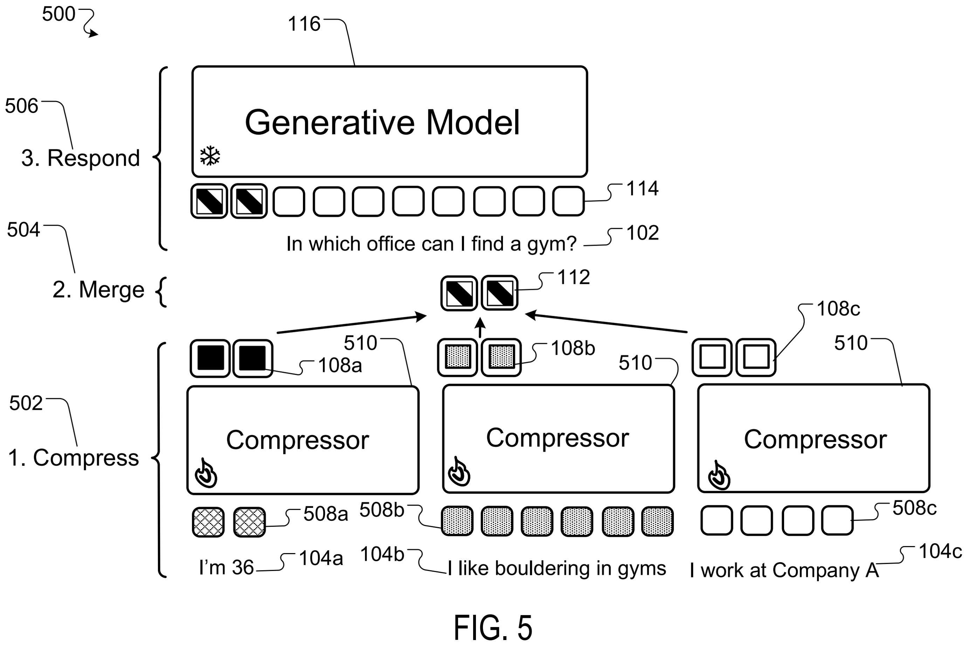

FIG. 5 illustrates an example architecture 500 for a response generation system, e.g., the response generation system 100 of FIG. 1. The architecture 500 can include a compression stage 502, a merging stage 504, and a response stage 506.

The compression stage 502 includes a compression generative neural network 510. The compression generative neural network 510 can process a content item 104a-c to generate a respective corresponding compressed representation 108a-c of the content item. For example, a content item 104a can be the text "I'm 36.", a content item 104b can be the text "I like bouldering in gyms", and a content item 104c can be the text "I work at Company A".

The compression generative neural network 510 can be constructed using a foundational pre-trained model, such as a large language model. The weights of this foundational model can be held fixed, or "frozen," during the training of the compression model. The compression neural network 510 can be trained to generate a compressed representation of a content item, e.g., using the process 400 of FIG. 4.

The compression generative neural network 510 can process a tokenized representation 508a-c of a content item 104a-c. The tokenized representation can be a compact representation of the content item that can be processed by the neural network. For example, a content item that is a text document can be tokenized by converting its words into a sequence of numerical identifiers. These identifiers can then be mapped to embedding vectors and form the tokenized representation.

The merging stage can include an aggregator, e.g., the aggregator 110 of FIG. 1. The aggregator can merge the compressed representations 108a-c to generate an aggregated compressed representation 112 of the content items 104a-c. The aggregator can use a mean-pooling operation to merge the compressed representations 108a-c. The mean pooling operation can compute an element-wise average of the vectors from each compressed representation to generate the single aggregated representation. This process can be order-agnostic, meaning the final aggregated representation is independent of the order in which the individual compressed representations are processed. The resulting aggregated representation can have the same shape as the individual compressed representations. For example, if each compressed representation 108a-c includes two vectors as shown in FIG. 5, the aggregated compressed representation 112 can also include two vectors.

The response stage can include a generative neural network 116. The generative neural network 116 can be a pre-trained large language model. The generative neural network 116 can process a query 102 to generate a response. The query can provide the specific information request that guides the generative neural network in formulating an answer. The query 102 can read, for example, "In which office can I find a gym?".

The generative neural network can process an input 114 that includes the aggregated compressed representation 112 and a tokenized version of the query to generate the response. To form the input 114, the generative neural network can generate a tokenized representation of the query 102 and concatenate it with the aggregated compressed representation 112.

The generative neural network 116 can generate a response based on the input 114 that includes the combined information from the query 102 and the content items 104a-c. In the example illustrated in FIG. 5, the response to the query can be based on the user's age, work location, and hobbies to provide a relevant and personalized answer. The response to the query can be, for example, a suggestion of a gym within an office associate with Company A.

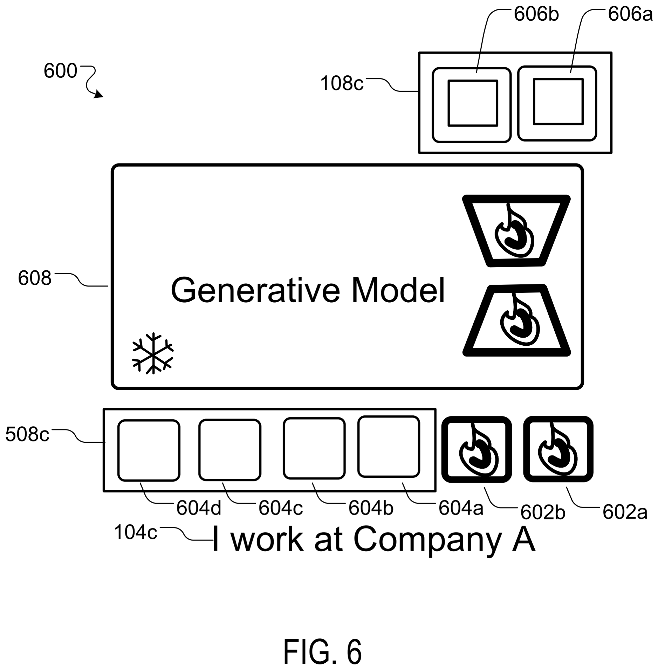

FIG. 6 shows an example architecture 600 of a compression neural network of a compression model, e.g., the compression model 106 of FIG. 1. The compression neural network can include a frozen generative neural network 608. The frozen generative neural network 608 can be, for example, a frozen large language model (LLM).

The compression neural network can append a tokenized representation 508c of a content item 104c with trainable compression embeddings 602a-b to generate an input for the frozen generative neural network 608. The tokenized representation 508c of the content item 104c can include embeddings 604a-d that represent words in the content item. The content item 104c can include, for example, the text "I work at Company A". The content item 104c is first converted into a tokenized representation 508c. The tokenized embedding can be a sequence of embeddings 604a-d that represent the content of the item. The tokenized representation is then combined with one or more trainable compression embeddings 602a-b. In some implementations, the compression embeddings 602a-b can be appended to the to the sequence of embeddings 604a-d to form a combined input sequence of embeddings.

The frozen generative neural network 608 can process the input to generate a compressed representation 108c of the content item 104c. The frozen generative neural network 608 can be a pre-trained large language model (LLM), and its weights can be held fixed during the training of the compression model. The frozen generative neural network 608 can processes the entire input sequence 508c through multiple neural network layers. During this process, the representations of the compression embeddings 602a-b can be influenced by the content of the tokenized representation 508c. This can allow information from the content item to be injected into the final representations of the compression embeddings.

To allow the frozen generative neural network 608 to be adapted for the compression task without modifying its core weights, trainable parameters can be introduced to the compression neural network. For example, a Low-Rank Adaptation (LoRA) technique can be used to add a small number of trainable weights to the layers of the frozen generative neural network 608. During training of the compression neural network 510, updates can be applied only to these trainable weights and the trainable compression embeddings 602a-b. Training the compression neural network is described in further detail above with reference to FIG. 4.

The compressed representation 108c of the content item 104c can be the final layer of the frozen generative neural network's 608 representations 606a-b of the compression embeddings. The compressed representation 108c can be formed by extracting the final layer representations of the trainable compression embeddings. The number of compression embeddings can be fixed. The resulting compressed representation 108c has a fixed size, regardless of the length of the original content item 104c. The final representations 606a-b can represent the salient information from the content item 104c in a compact format. The compact format can be suitable for subsequent merging and processing by a generative neural network.

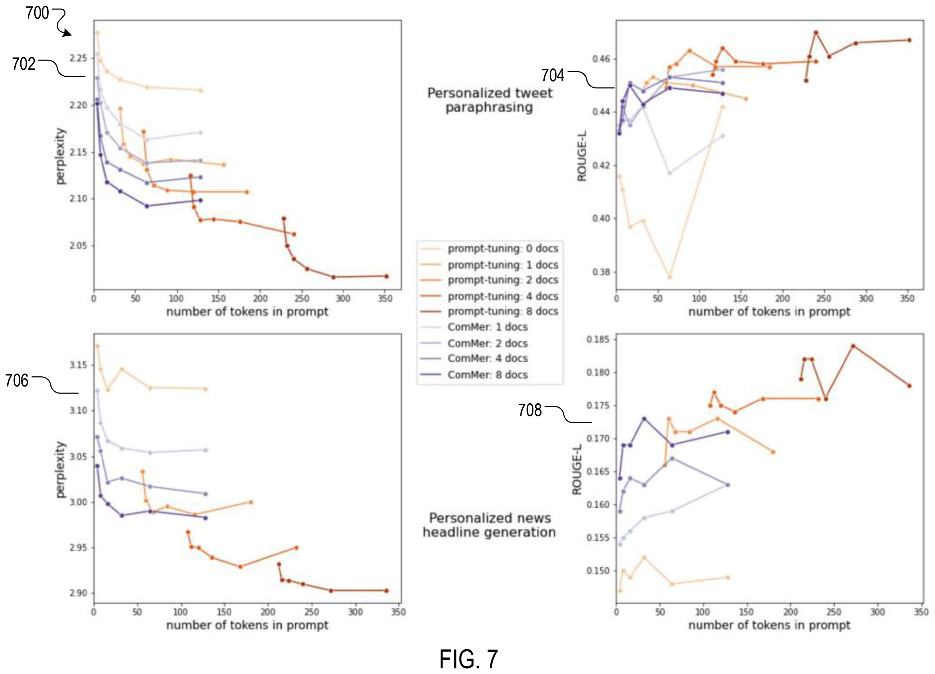

FIG. 7 shows example 700 trade-offs between cost and quality for response generation tasks. The example 700 includes four graphs 702, 704, 706, 708 that illustrate example trade-offs between cost and quality in personalized skill learning tasks for both systems using prompt-tuning and systems using compressed representations. The cost can be represented by a number of tokens in a prompt, and the quality can be represented by perplexity or a ROUGE-L score. The curves in the graphs can represent models trained with a different number of embeddings, e.g., 4, 8, 16, 32, 64, or 128 embeddings.

The graph 702 shows perplexity versus a number of tokens in a prompt for a personalized social media post paraphrasing task. The graph 704 shows a ROUGE-L score versus a number of tokens in a prompt for the personalized social media post paraphrasing task. The graph 706 shows perplexity versus a number of tokens in a prompt for a personalized news headline generation task. The graph 708 shows a ROUGE-L score versus a number of tokens in a prompt for the personalized news headline generation task.

As illustrated in the graphs 702, 704, 706, and 708, for both prompt-tuning and systems using compressed representations, a system using compressed aggregated representations, e.g., the response generation system 100 of FIG. 1, can achieve higher quality results while using fewer resources compared to prompt-tuning. For example, as shown in graph 702, for a personalized tweet paraphrasing task within a specific token budget (e.g., up to 128 tokens), a system using a compressed representations as described in this specification can achieve results with higher perplexity, e.g., higher quality, while using fewer tokens in a prompt compared to prompt-tuning.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:
receiving a query for a task to be performed;
receiving a plurality of content items for the task;
for each content item of the plurality of content items, processing an input comprising a representation of the content item using a trained compression model to generate a compressed representation of the content item comprising one or more vectors of a fixed size;
generating, using the compressed representations, an aggregated compressed representation comprising one or more vectors that represents the plurality of content items; and
processing an input comprising (i) the query and (ii) the aggregated compressed representation using a generative neural network to generate a response to the query,
wherein the method further comprises:
receiving a new content item for the task;
processing an input comprising a representation of the new content item using the trained compression model to generate a new compressed representation of the new content item comprising one or more vectors of the fixed size;
updating the aggregated compressed representation using the new compressed representation.

2. The method of claim 1, wherein processing the input comprising the representation of the content item using a trained compression model comprises:
appending one or more compression embeddings to the representation of the content item;
processing the representation of the content item and the one or more compression embeddings using a compression generative neural network comprising a plurality of neural network layers; and
using, as the compressed representation of the content item, representations of the one or more compression embeddings generated by a last neural network layer in the compression generative neural network.

3. The method of claim 2, wherein the one or more compression embeddings are learned during training.

4. The method of claim 2 or claim 3, wherein the plurality of neural network layers comprise one or more self-attention layers.

5. The method of any preceding claim, wherein generating the aggregated compressed representation comprising applying an order-agnostic aggregation operation to the compressed representations of the content items, optionally wherein the order-agnostic aggregation operation is a mean pooling operation.

6. The method of any preceding claim wherein the aggregated compressed representation is of the fixed size.

7. The method of any one of the preceding claims, wherein the new content item is a context item indicative of a current context, optionally wherein the new content item comprises sensor data relating to a current environmental context.

8. The method of any preceding claim, the method further comprising training the compression model.

9. The method of claim 7 when dependent on claim 2, wherein training the compression model comprises:
receiving a plurality of training examples, each training example comprising (i) a training query and (ii) a training response to the training query;
receiving a plurality of training context content items for the task;
for each training content item of the plurality of training content items, processing an input comprising a representation of the training content item using the compression model to generate a compressed representation of the training content item comprising one or more vectors of a fixed size;
generating, using the compressed representations, a training aggregated compressed representation comprising one or more vectors that represents the plurality of training content items; and
training the compression model using the plurality of training examples and the training aggregated compressed representation to minimize an objective function
optionally wherein the objective function comprises a cross-entropy loss term.

10. The method of claim 8, wherein training the compression model using the plurality of training examples and the training aggregated compressed representation to minimize an objective function comprises, for each training example: processing the training query and the training aggregated compressed representation using the generative neural network to generate a response to the training query; wherein the objective function measures a quality of the response to the training query relative to the training response to the training query.

11. The method of claim 8 or claim 9 when dependent on claim 2, wherein training the compression model comprises propagating gradients to the one or more compression embeddings.

12. The method of any preceding claim when dependent on claim 9, wherein the compression model has (i) pre-trained weights that are held fixed during the training and (ii) trainable weights that are updated during the training, optionally wherein the trainable weights are Low-Rank Adaptation (LoRA) weights..

13. The method of any preceding claim wherein the content items are images, text documents, audio files and/or videos.

14. A system comprising:
one or more computers; and
one or more storage devices communicatively coupled to the one or more computers, wherein the one or more storage devices store instructions that, when executed by the one or more computers, cause the one or more computers to perform the method of any one of claims 1 to 13.

15. One or more non-transitory computer storage media storing instructions that when executed by one or more computers cause the one or more computers to perform the method of any one of claims 1 to 13.
